Europäisches Patentamt

(19) European Patent Office

Office européen des brevets

(11) Publication number : **0 409 661 B1**

(12) **EUROPEAN PATENT SPECIFICATION**

(45) Date of publication of patent specification :
11.01.95 Bulletin 95/02

(51) Int. Cl.[6] : **H02K 1/27**

(21) Application number : 90308014.1

(22) Date of filing : 20.07.90

(54) Motor.

(30) Priority : 21.07.89 JP 187252/89
21.07.89 JP 187253/89
21.07.89 JP 187254/89

(43) Date of publication of application :
23.01.91 Bulletin 91/04

(45) Publication of the grant of the patent :
11.01.95 Bulletin 95/02

(84) Designated Contracting States :
DE FR GB

(56) References cited :
EP-A- 0 053 485
EP-A- 0 201 793
US-A- 4 713 569
PATENT ABSTRACTS OF JAPAN vol. 8, no.
277 (E-285)(1714) 18 December 1984 ; &
JP-A-59 144 348

(56) References cited :
PATENT ABSTRACTS OF JAPAN vol. 8, no.
268 (E-283)(1705) 07 December 1984 ; & JP-
A-59 139 842
PATENT ABSTRACTS OF JAPAN vol. 8, no.
277 (E-285)(1714) 18 December 1984 ; & JP-
A-59 144 352

(73) Proprietor : MITSUBISHI KASEI
CORPORATION
5-2, Marunouchi 2-chome
Chiyoda-ku
Tokyo 100 (JP)

(72) Inventor : Arita, Yoji
20-15-205, Edaminami 5-chome,
Midori-ku
Yokohama-shi, Kanagawa-ken (JP)

(74) Representative : Allam, Peter Clerk et al
LLOYD WISE, TREGEAR & CO.
Norman House
105-109 Strand
London WC2R 0AE (GB)

## Description

The present invention relates to an electric motor of the kind having a permanent magnet field system and an armature core. The invention is particularly concerned with measures to reduce cogging torques and torque ripple in such motors and is applicable to radial gap and axial gap types of motor.

The conventional design of prior motor of this find has a field magnetic system comprising an even number of permanent magnetic poles arranged in a circle, the or each two adjacent poles being of opposite polarity. The armature has a number of poles, each of which has an end portion facing the field magnet system and defining therewith a magnetic gap across which magnetic flux extends to generate torque in the operation of the motor. In the conventional motor, the field magnet system has a magnetic flux generating area whose widthwise length perpendicular to the rotation of the armature is constant. That is the widthwise length, h($\theta$), as a function of the angle $\theta$ about the axis of rotation, is constant.

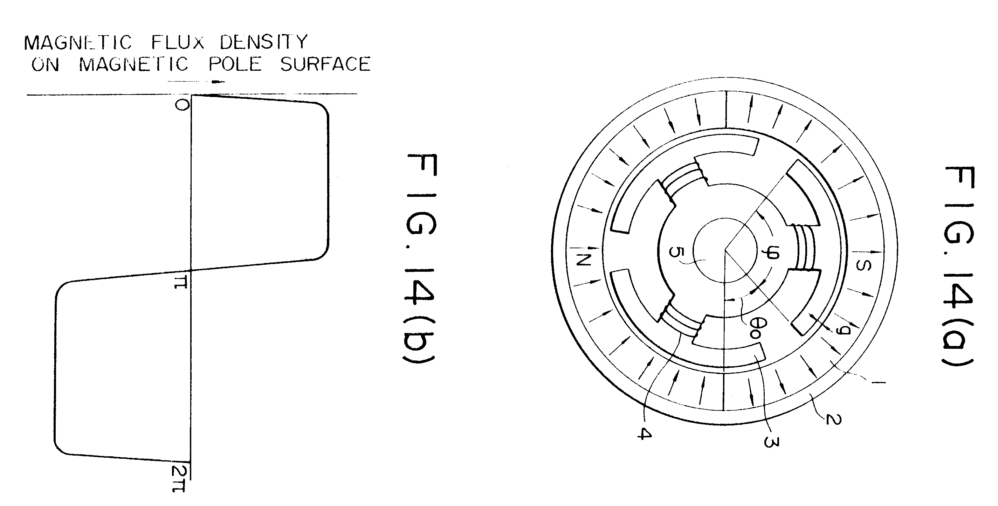

A schematic cross-sectional view of a prior art motor is shown in Fig. 14(a), which essentially comprises two magnetic pieces 1, a magnetic yoke 2 and an armature 3. The magnetic pieces 1, each made of a semi-circular permanent magnet, are fixed to the magnetic yoke 2 and are arranged in circle such that the their magnetic poles facing the the armature 3 are N-pole and S-pole, respectively. The armature 3 is rotatable about a rotating axis 5 and provided with three protruding poles whose outer ends extend a predetermined length in the peripheral direction, respectively. Each of the protruding poles has a coil 4 wound therearound and energized in a known manner. The end surface of each of the protruding poles faces the magnetic poles of the magnetic pieces 1 with a gap g. The rotating axis 5, together with the armature 3 and the magnetic pieces 1, are supported by a supporting member (not shown). Fig. 14(b) is a view illustrating the distribution of the magnetic flux density on the magnetic pole surface, in the motor rotating direction.

In such kind of prior art motor, a cogging torque has been a serious problem, because it causes a big problem of torque ripple. For this, several methods have been proposed to reduce the cogging torque. For example, one of them adapts measures to distribute the magnetization of the magnetic pieces 1 sinusoidally in the motor rotating direction, and another one adapts measures to control a magnetized angle of the magnetiziation of the magnetic pieces 1 (see Japanese Patent Laid-Open No. 61-254,045/1986). However, no methods have been successful in eliminating the cogging torque completely.

Published Japanese patent application JP-A-59 144 348 discloses an electric motor of the kind set forth above in which the widthwise length, h($\theta$), of the magnetic flux generating area is not constant. In the field magnet system described in this specification the length, h($\theta$), varies with $\theta$ in such a way that the distribution of magnetic flux around the field system is sinusoidal. This distribution is intended to reduce cogging torques. The specification does not address the problem of reducing torque ripple.

Broadly stated the present invention provides an electric motor of the kind having a field magnet system comprising an even number m of permanent magnetic poles arranged in a circle, the or each two adjacent poles being of opposite polarity (N,S),

an armature having a number p of poles each of which has an end portion facing the field magnet system and defining therewith a magnetic gap across which magnetic flux extends to generate torque in the operation of the motor,

wherein the field magnet system has a magnetic flux generating area whose widthwise length, h($\theta$), perpendicular to the direction of rotation of the armature is not constant, characterised in that:

said widthwise length h($\theta$) varies with a rotational angle ($\theta$) of the armature and comprises a fundamental sinusoidal component together with a selected distribution of harmonic components in accordance with the formula

$$h(\theta) = h_0 + \sum_{n=1}^{\infty} a_n \cos(2\pi n\theta/T) + \sum_{n=1}^{\infty} b_n \sin(2\pi n\theta/T) \quad (1)$$

wherein

n is an integer of (i x j) ± 1 where j is an even number of 2 to 20,

$a_n$ is a coefficient for cosine components,

$b_n$ is a coefficient for sine components and is not zero for at least one value of n,

T is a period of rotation of the armature through an angle corresponding to the peripheral length of a pair of adjacent N-pole and S-pole,

i is an integer given by p/q where q is the greatest common measure of m/2 and p, and

$h_0$ is equal to H when $0 \le \theta < \pi$ and equal to -H when $\pi \le \theta < 2\pi$ where H is a standard widthwise length of the field magnet system.

2

In the above formula (1), "standard widthwise length" means a constant widthwise length onto which no variation is incorporated. The sign of H only indicates its polarity. In applying the invention to a known design of prior art motor, it corresponds to the constant widthwise length of the field magnet system of the prior art motor and does not include the change of polarity. In the prior art motor, $\underline{h}$ is equal to H when $0 \leqq \theta < \pi$ and equal to -H when $\pi \leqq \theta < 2\pi$. and the coefficients $a_n$ and $b_n$ are all zero.

A field magnet system satisfying the above formula may be achieved in various ways. More specifically, a specific magnetized pattern may be given to the permanent magnets, or the shape of the permanent magnets may be controlled so that the widthwise length satisfies the above conditions. Further, a part of the magnetic pole surface of the permanent magnets may be covered with a thin soft magnetic material so that the widthwise length of the effective magnetic pole areas facing the poles of the armature satisfies the above conditions.

With such configuration, a cogging torque can be reduced sufficiently, and also a torque ripple can be eliminated at the condition of substantially zero cogging torque.

The present invention also provides a method of trimming a torque characteristic of a motor comprising a field magnet system with a constant widthwise length comprising plural permanent magnetic poles arranged in circle such that the adjacent two permanent magnetic poles have opposite polarity to each other, and an armature with plural poles, the end surface of each of the poles facing the magnetic poles of the field magnet system, said method comprising the steps of: measuring the distribution of the magnetic flux generated by the field magnet system relative to the rotational angle of the armature; evaluating the harmonic wave components of the magnetic flux generated by the field magnet system by expanding in a series a function expressing the distribution curve of the magnetic flux; measuring the cogging torque generated by the field magnet system relative to the rotational angle of the armature; examining the relationship between the harmonic wave components of the magnetic flux and the cogging torque; and adjusting the widthwise length of the magnetic flux generating area of the field magnet system by incorporating into the widthwise length the variation corresponding to the selected harmonic wave components which cause the cogging torque to be eliminated.

BRIEF DESCRIPTION OF THE DRAWINGS

Fig. 1(a) is a schematic view in cross section of a motor embodying of the present invention,
Fig. 1(b) is a perspective view illustrating a magnetic pole piece in Fig. 1,
Fig. 1(c) is a front development of another example of a magnetic pole piece in Fig. 1,
Fig. 1(d) is a perspective view illustrating the magnetic pole piece in Fig. 1(c),
Figs. 2(a) to 2(d) explains how to add the fifth-order mode to the fundamental mode,

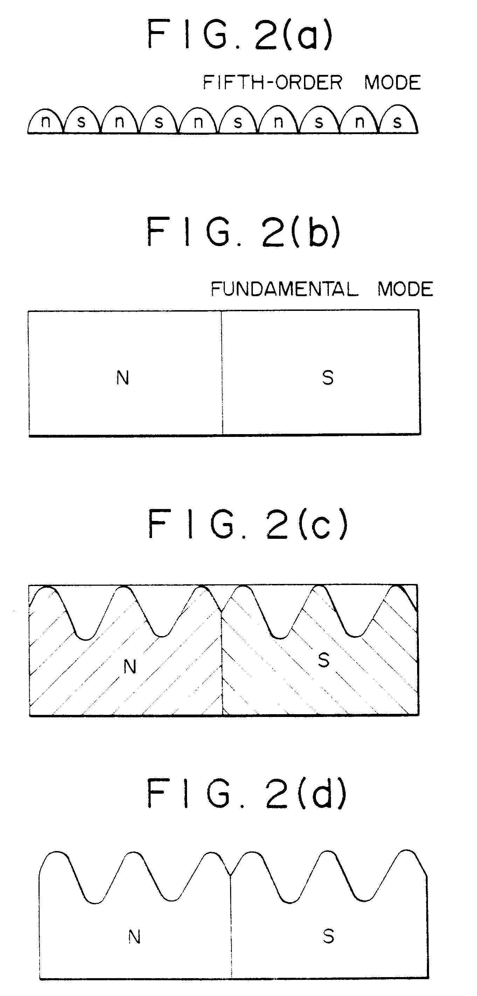

Fig. 2(a) is a view illustrating the fifth-order mode schematically,
Fig. 2(b) is a view illustrating the fundamental mode schematically,
Fig. 2(c) is a view illustrating a magnetic pole surface including a magnetic flux generating area therein,
Fig. 2(d) is a view illustrating a magnetic pole surface whose whole area coincides with a magnetic flux generating area,

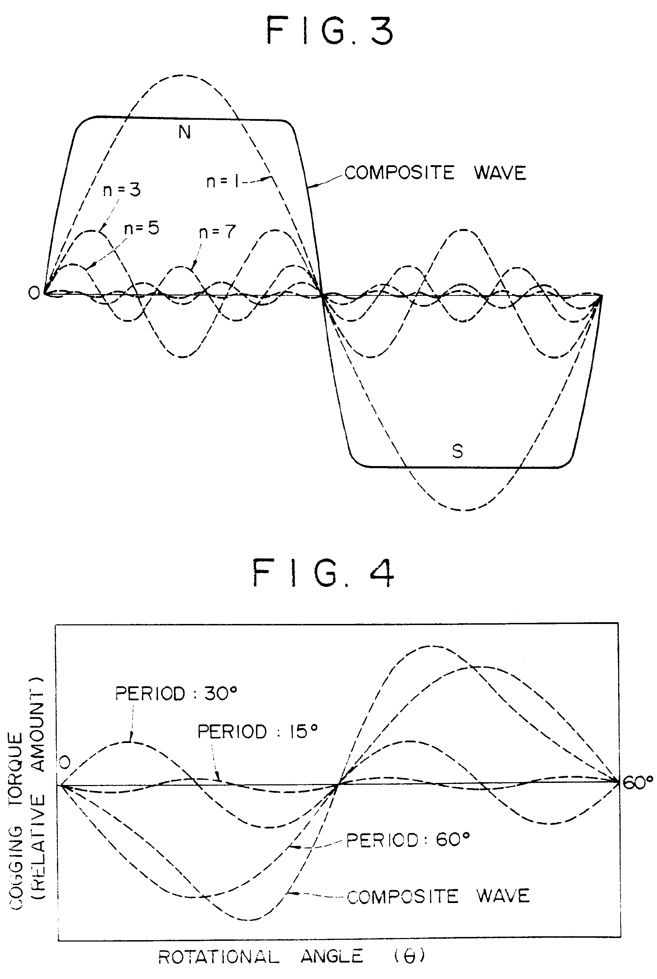

Fig. 3 is a view illustrating the distribution of the components of magnetic flux density on the magnetic pole surface of a prior art motor of Fig. 14(a) relative to the rotational direction,
Fig. 4 is a view illustrating cogging torque characteristic of the prior art motor of Fig 14(a),

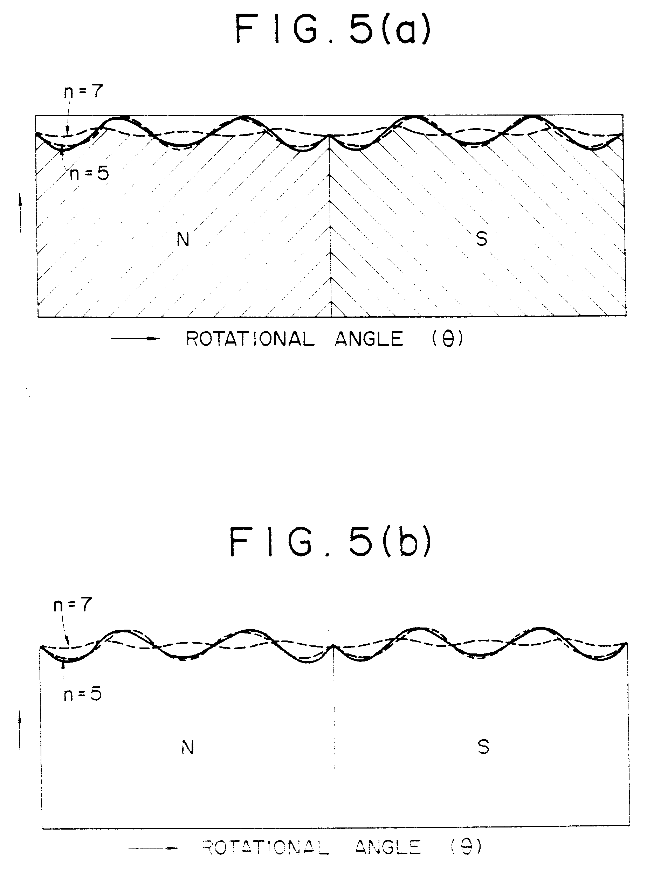

Fig. 5(a) is a view illustrating the magnetized pattern of the permanent magnets of the prior art motor into which fifth-order and seventh-order modes are incorporated in accordance with the present invention,
Fig. 5(b) is a view illustrating the magnet shape of the permanent magnets into which fifth-order and seventh-order modes are incorporated in accordance with the present invention,

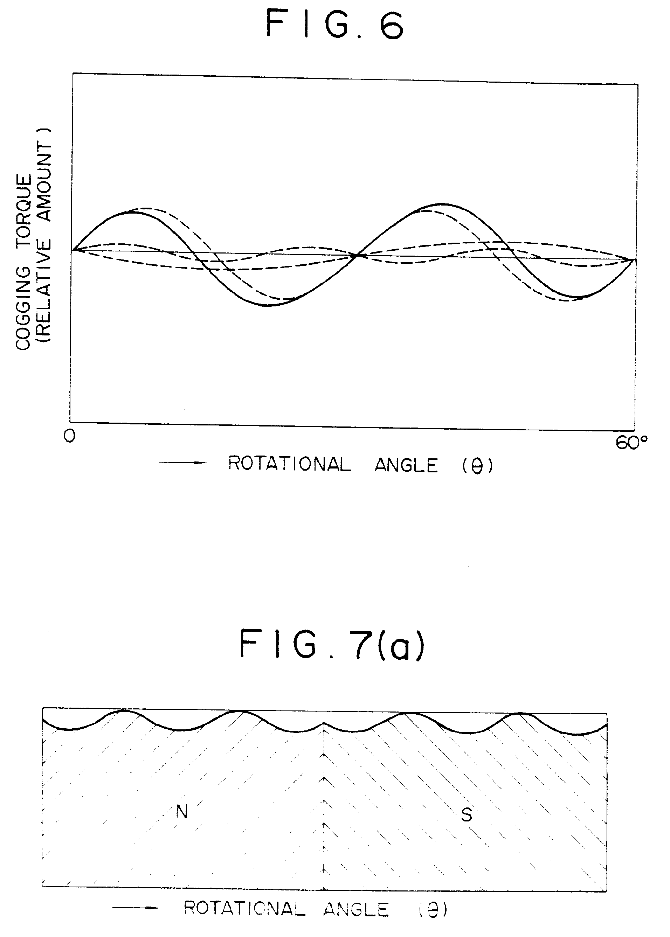

Fig. 6 is a view illustrating cogging torque characteristic of the motor using the permanent magnets in Fig. 5(a) and (b),

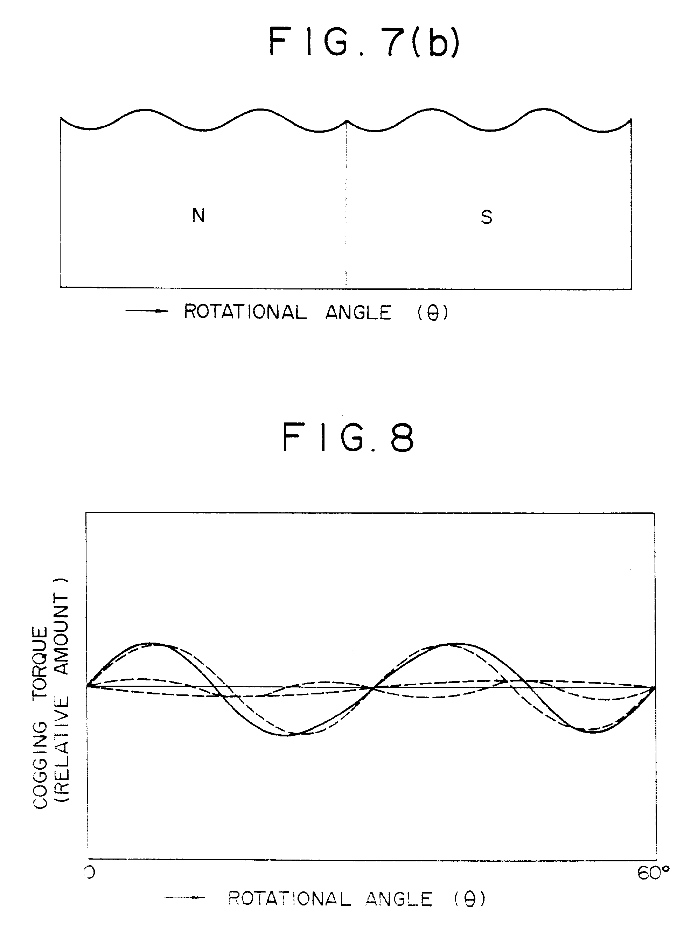

Fig. 7(a) is a view illustrating the magnetized pattern of the permanent magnets of the motor of Fig. 14(a) into which only fifth-oder mode is incorporated in accordance with the present invention,
Fig. 7(b) is a view illustrating the magnet shape of the permanent magnets of the motor of Fig. 14(a) into which only fifth-oder mode is incorporated in accordance with the present invention,
Fig. 8 is a view illustrating cogging torque characteristic of the motor using the permanent magnets in Fig. 7(a) and (b),

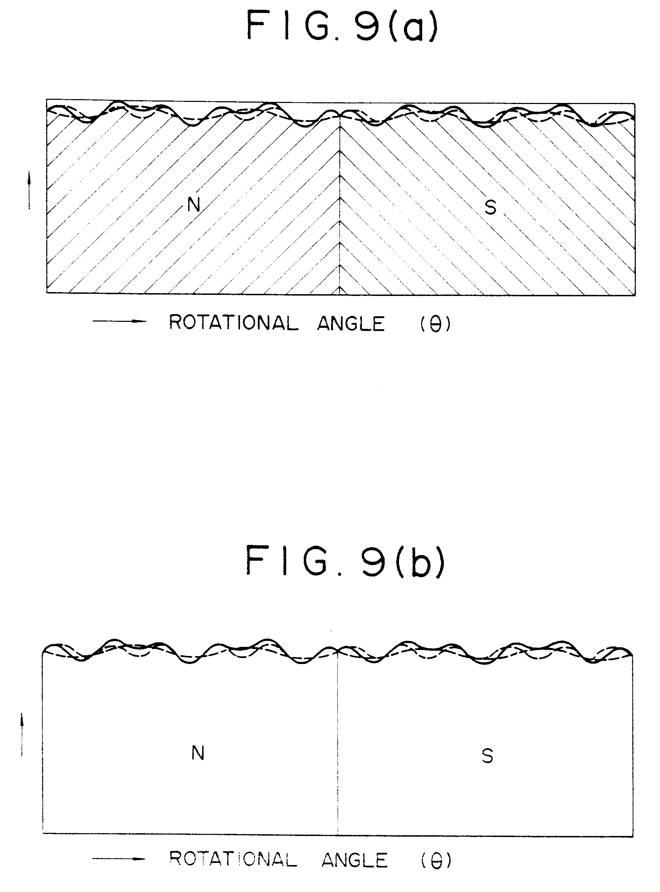

Fig. 9(a) is a view illustrating the magnetized pattern of the permanent magnets of the motor of Fig. 14(a) into which fifth-order and eleventh-order modes are incorporated in accordance with the present invention,
Fig. 9(b) is a view illustrating the magnet shape of the permanent magnets of the motor of Fig. 14(a) into which fifth-order and eleventh-order modes are incorporated in accordance with the present invention,

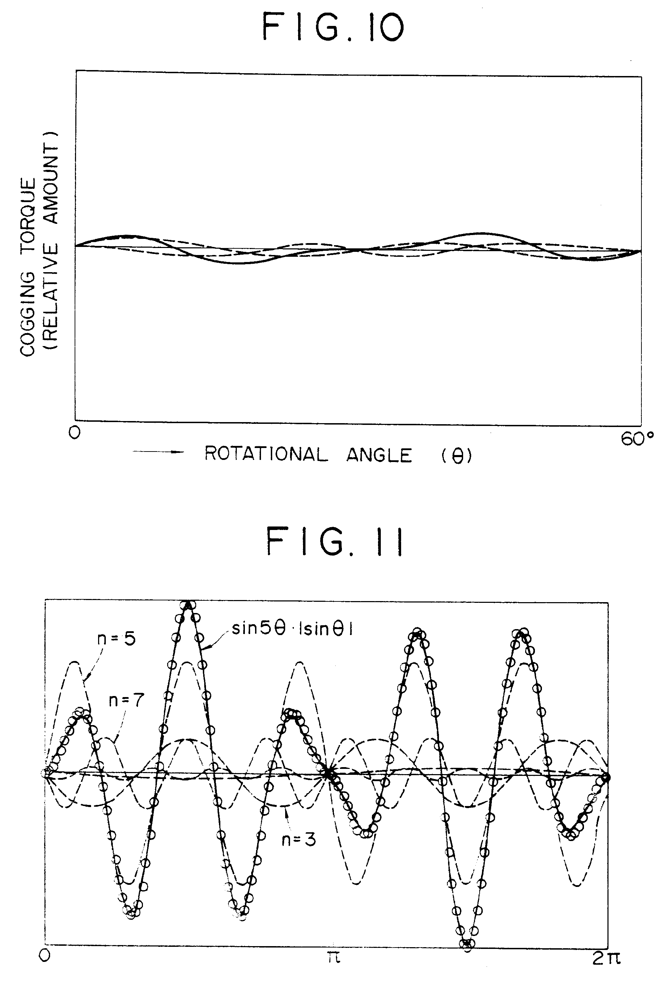

Fig. 10 is a view illustrating cogging torque characteristic of the motor using the permanent magnets in Fig. 9(a) and (b),

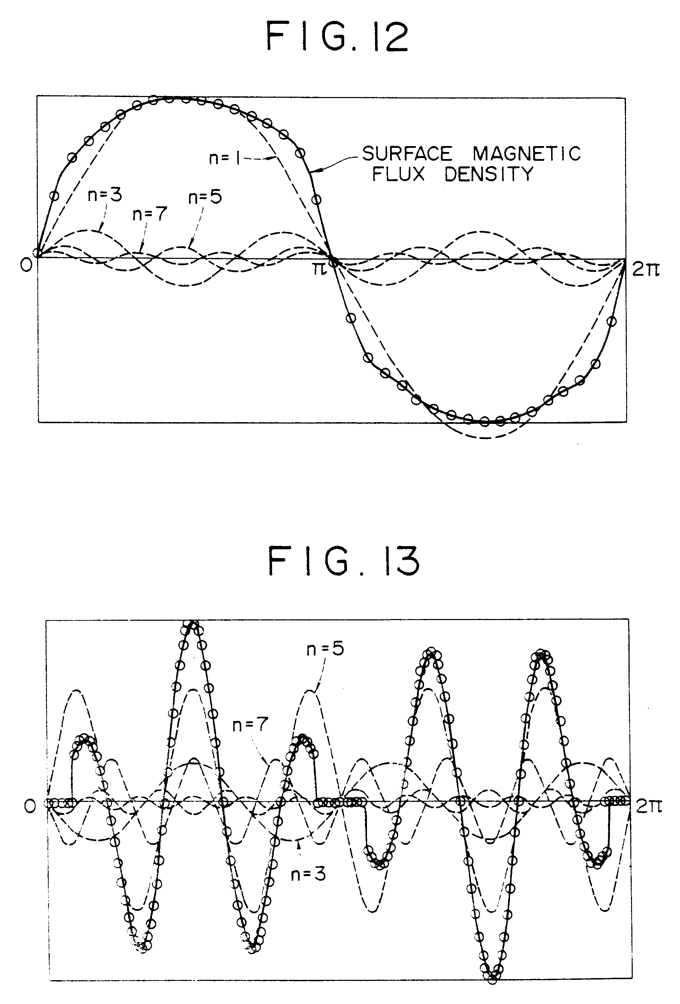

Fig. 11 is a view illustrating driving torque characteristics when fifth-order mode is incorporated in the permanent magnets in the prior motor of Fig 14(a),

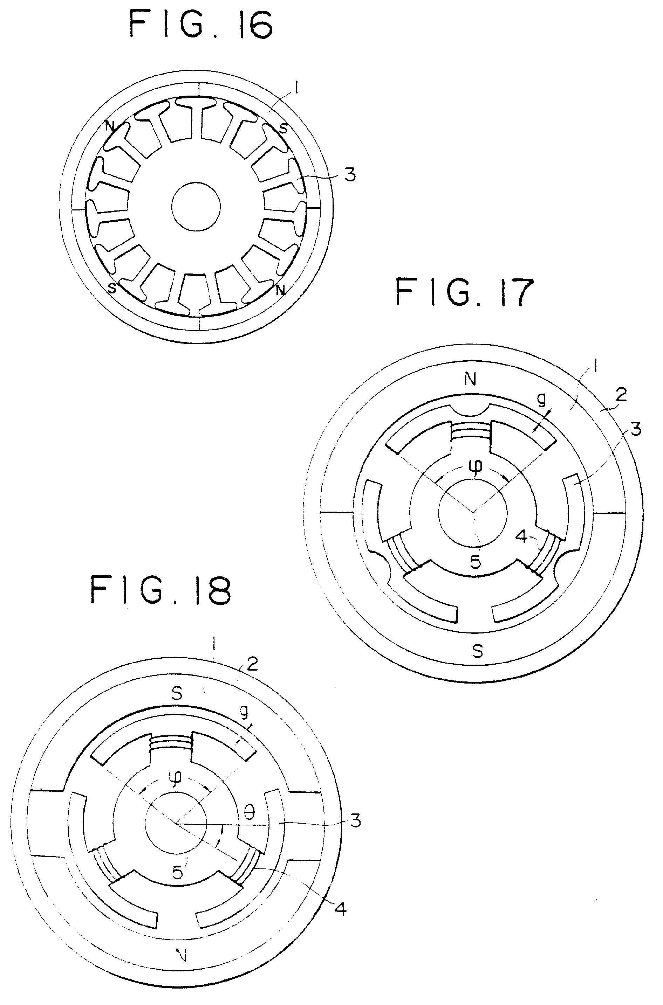

Fig. 12 is a view illustrating the component distribution of the surface magnetic flux density of the prior art motor of Fig. 18 using a field magnet system having C-shaped permanent magnets,

Fig. 13 is a view illustrating driving torque characteristics when fifth-order mode is incorporated in the permanent magnets in the prior art motor of Fig 18,

Fig. 14(a) is a schematic view in cross section of a prior art motor having permanent magnets whose magnetization directs along the radial direction,

Fig. 14(b) is a view illustrating the surface magnetic flux density on the magnetic pole surface in the motor of Fig. 14(a),

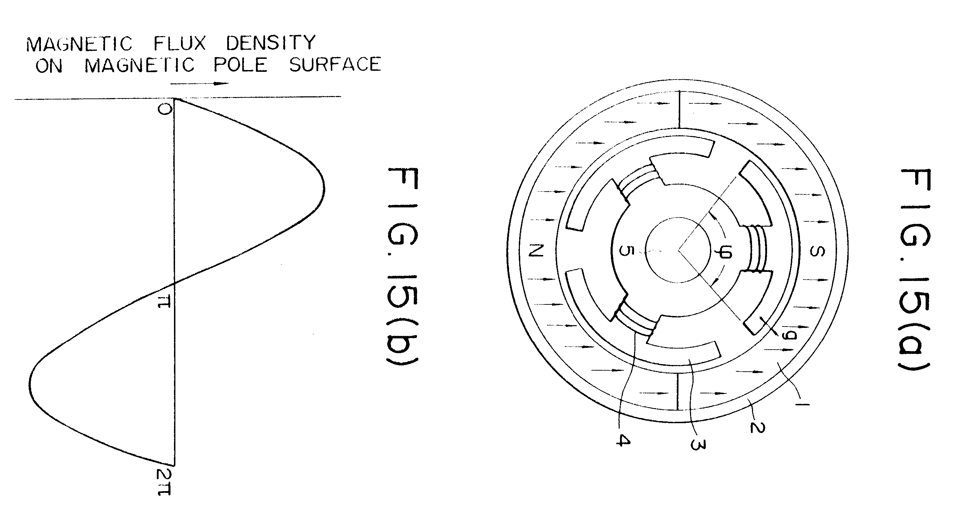

Fig. 15(a) is a schematic view in cross section of a prior art motor having permanent magnets whose magnetization directs along one specified direction,

Fig. 15(b) is a view illustrating the surface magnetic flux density on the magnetic pole surface in the motor of Fig. 15(a),

Fig. 16 is a schematic view in cross section of a prior art motor having four permanent magnets and 15 protruding poles,

Fig. 17 is a schematic view in cross section of a prior art motor whose protruding pole has an auxiliary groove formed therein, and

Fig. 18 is a schematic view in cross section of a prior art motor using C-shaped permanent magnets.

The principle on which the present invention is based is described prior to the explanation of the embodiments. For this purpose, the simplest motor with two magnetic poles and three protruding poles, as shown in Fig. 14(a), is exemplified.

Generally, a torque TQ of a radial gap type motor is expressed by the following equation (2):

$$T Q = - \frac{\nu_o R}{2} \int_0^{2\pi} F_r(\theta) \cdot F_\theta(\theta)\, d\theta \qquad \cdots (2)$$

where

$F_r(\theta)$ is an amount of magnetic flux along the radial direction within the gap $\underline{g}$,

$F_\theta(\theta)$ is an amount of magnetic flux along the rotational direction within the gap $\underline{g}$,

R is a radius at the location of the gap $\underline{g}$, and

$\nu_o$ is a reluctivity in the gap $\underline{g}$.

In Fig. 14(a), $\phi$ is specified as an angle subtended, in the motor rotational direction, by the pole surface of the protruding pole, and $\theta_o$ is specified as an angle formed by one end, in the motor rotational direction, of the pole surface of the protruding pole and a reference angular position. As shown in the above equation (2), since the torque TQ is generated in accordance with the product of $F_r(\theta) \cdot F_\theta(\theta)$, it may be considered that the torque TQ is generated only within the gap between the protruding pole and the permanent magnet, where the magnetic flux density becomes large. Accordingly, it is sufficient to perform the integral in the above equation (2) only over the range within the gap where the protruding pole exists.

If it is assumed that $F_r(\theta)$, the amount of magnetic flux along the radial direction, is generated by the magnetic poles of the magnetic pieces 1, the distribution of the magnetic flux relative to the rotational angle can be expressed in a composite form of the fundamental sine wave component and higher harmonic sine wave components Namely, if T is defined as one period of rotation of the armature through an angle corresponding to a pair of N-pole and S-pole, which is $2\pi$ in this case, $2\pi n \theta / T$ is written as $n\theta$, then $F_r(\theta)$ can be expressed as follows:

$$F_r(\theta) = F_o\left(\sin\theta + \sum_{n=2}^{\infty} \beta_n \cdot \sin n\theta\right) \qquad \cdots (3)$$

where $F_o$ is a constant, $\underline{n}$ is an integer larger than 1 and $\beta_n$ is a mixing ratio of n-th-order component to the fundamental (first-order) component.

If $\beta_n$ is written as $(b_n/b_1)$ and $F_o$ is equal to $b_1$ in the above equation (3), the form of the rewritten equation coincides with that of the equation (1) wherein both constant $h_o$ and cosine components are zero. Therefore, it is understood that the amount of magnetic flux $F_r(\theta)$ has a linear relationship to the widthwise length $h(\theta)$ of the magnetic flux generating area.

4

The amount of magnetic flux $F_\theta (\theta)$ along the rotational direction can be obtained by differentiating $F_r (\theta)$ with respect to the rotational angle, which is expressed as follows:

$$F_\theta (\theta) = - \frac{dF_r (\theta)}{d\theta} = - F_0 (\cos \theta + \sum_{n=2}^{\infty} \beta_n \cdot n \cos n \theta) \quad \cdots (4)$$

Now considering only the fundamental wave component and n-th-order (specified one) wave component in the product of $F_r(\theta) \cdot F_\theta (\theta)$ in the above equation (2), the product is rewritten as follows:

$$F_r (\theta) \cdot F_\theta(\theta) = - F_r (\theta) \frac{dF_r(\theta)}{d\theta}$$

$$= - F_0^2 [\frac{1}{2} \sin 2\theta + \frac{n\beta_n}{2}\{\sin(n + 1) \theta - \sin(n - 1)\theta\}$$

$$+ \frac{\beta_n}{2}\{\sin(n + 1) \theta + \sin(n - 1) \theta\} + \beta_n^2 \sin n \theta \cdot \cos n \theta] \quad (5)$$

In the above equation (5), the last term is negligible because the ratio $\beta_n$ of the n-th-order wave component to the fundamental, wave component is usually small, therefore, $\beta_n^2$ is considered to be considerably smaller than 1 ($\beta_n^2 << 1$).

If the magnetic flux $F_r(\theta)$ generated by the magnetic piece 1 contains only the k-th-order component, the product $F_r (\theta) \cdot F_\theta (\theta)$ in the above equation (2) is rewritten as follows:

$$F_r (\theta) \cdot F_\theta(\theta) = - F_0^2 \cdot \frac{k}{2} \sin 2k \theta \quad (6)$$

When the magnetic flux generated by the magnetic pieces 1 has a single higher-order sine wave component, a cogging torque is generated if the order is equal to an integer times of the number of the protruding poles (3, 6, 9,$\cdots$ in the motor of this case), and otherwise a cogging torque is not generated. In other words, in this motor, a cogging torque is generated when $n\pm1$ is equal to an integer times of 3 in the above equation (5). Comparing the equations (5) and (6), it is clearly understood that $n\pm 1$ corresponds to 2k. Namely, a cogging torque is generated in this motor when n-th-order mode of the magnetic flux satisfying the condition that $(n\pm1)/2$ is equal to a multiple of 3 is added to the fundamental mode. For example, in the case of n = 5, no cogging torque is generated when only fifth-order mode exists in the magnetic flux, but a cogging torque due to single third-order mode is generated when only a small amount of fifth-order mode is added to the fundamental mode, that is, when $(5\pm1)/2=3$. On the contrary, when the higher-order mode which is apt to cause a cogging torque by itself, is combined with the fundamental mode, the higher-order mode affects only the term $\beta_n^2$ in the equation (5), therefore, a small cogging torque is generated.

It is now proposed to eliminate the cogging torque by adjusting the widthwise length of the magnetic flux generating area of the field magnet system by incorporating into the widthwise length the variation corresponding to the selected harmonic wave components which cause the cogging torque.

The number $\underline{m}$ of protruding poles in the practice of the present invention coincides with the number of coils 4 composing each phase in the case of a motor provided with normal concentrated windings as shown in Fig. 14(a). However, in the case of a motor provided with a large number of protruding poles and distributed windings as shown in Fig. 16, the number $\underline{m}$ is not the number of coils 4, but the number of protruding poles itself. In addition, in the case of a motor with main protruding poles in each of which is formed an auxiliary groove as shown in Fig. 17, the number $\underline{m}$ is the number of these small protruding portions.

Hereinafter the embodiments based on the principle of the present invention will be explained.

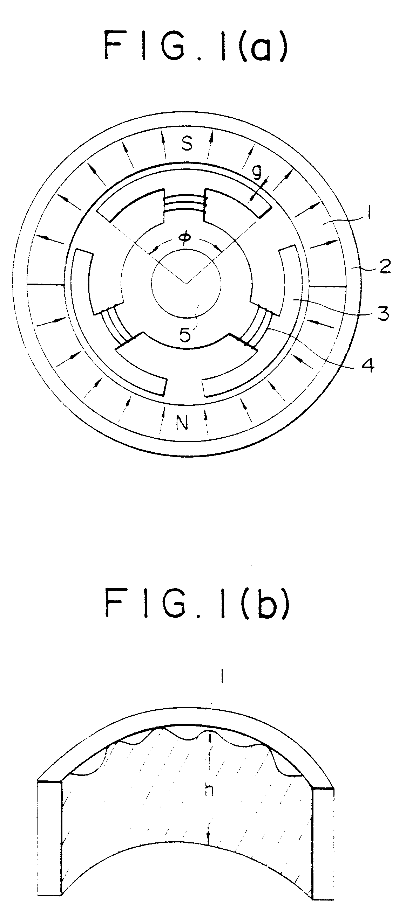

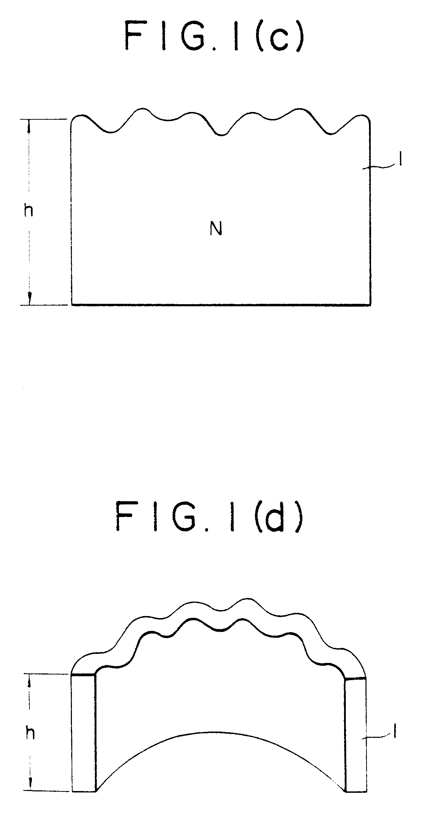

Figs. 1(a) to 1(d) are schematic views showing the first embodiment of the present invention, in which the principle is applied to the radial gap type motor with two magnetic poles, three protruding poles and concentrated windings (not shown) as shown in Fig. 14(a). In this motor, the magnetic pieces 1 have a magnetized area whose widthwise length $\underline{h}$, perpendicular to the motor rotational direction, includes an adjusting amount corresponding to higher harmonic wave components as shown in Fig. 1(b), or the magnetic pieces have a shape whose widthwise length $\underline{h}$ includes an adjusting amount corresponding to higher harmonic wave component as shown in Figs. 1(c) and (d). In this specification, the widthwise length $\underline{h}$ means a length of the magnetized area along the direction of the motor rotational axis in case of the radial gap type motor, and means a length of the same along the radial direction of the motor in case of the axial gap type motor.

Figs. 2(a) to 2(d) are schematic views explaining the method of incorporating the fifth-order harmonic wave component into the fundamental wave component. Fig. 2(a) shows the fifth-order mode and Fig. 2(b) shows the fundamental mode, but for simplicity, the shape of the fundamental mode is not represented by a sine wave, but by a rectangle in Fig. 2(b). The combination of the modes in Figs. 2(a) and 2(b) gives the pattern in Fig.

2(c) or the shape in Fig. 2(d). It is understood that only a change of the widthwise length of the magnetized area of the permanent magnets allows incorporation of a higher-order mode into the fundamental mode

The direction of magnetization of the permanent magnet used in the prior art motor is usually along the radial direction, as shown in Fig. 14(a), or along specified one direction as shown in Fig. 15(a). The magnetic flux on the magnetic pole surface of the magnetic pieces 1 distributes in a sinusoidal form in the case of motor of Fig. 15(a), and in a rectangular or trapezoidal form in the case of motor of Fig. 14(a). However, even if the magnetic flux distributes in a rectangular or trapezoidal form, when a function representing the distribution of the magnetic flux, is expanded in a Fourier series, its largest component is the first-order, fundamental wave. Accordingly, it is sufficient to investigate the incorporation of higher-order mode into the fundamental mode.

Fig. 3 shows the distribution of the magnetic flux on the magnetic pole surface of the magnetic pole pieces 1 in the prior art motor as shown in Fig. 14(a). This magnetic flux includes higher odd-number-order modes in addition to the fundamental mode. The cogging torque of this motor is shown in Fig. 4. As seen from Fig. 4, the cogging torque includes components having periods of 60°, 30° and 15°, As described above, the cogging torque component having a period of 60° is generated from the fifth-order and seventh-order components of the magnetic flux. The cogging torque component having period of 30° is generated from the eleventh-order and thirteenth-order components. The cogging torque component having a period of 15° is generated from the seventeenth-order and nineteenth-order components.

Figs 5(a) and 5(b) show a magnetized pattern and a magnet shape, respectively, in which -8% of fifth-order mode and -3% of seventh-order mode are incorporated into the fundamental mode in order to eliminate the fifth-order mode and seventh-order mode which are originally included in the permanent magnets. The cogging torque generated by the motor using such permanent magnets is shown in Fig. 6.

It is clearly understood from Fig. 6 that the reduction of the fifth-order mode and seventh-order mode of the magnetic flux results in the elimination of almost all of the cogging torque having period of 60° and leaving only the more higher-order mode cogging torques. The cogging torque having a period of 30° can be reduced in the same manner as above, by incorporating eleventh-order mode and thirteenth-order mode in the magnetized pattern or the magnet shape.

Figs. 7(a) and 7(b) schematically show a magnetized pattern and a magnet shape, respectively, in which -5% of fifth-order mode is incorporated into the fundamental mode so that the fifth-order component coincides with the seventh-order component of the magnetic flux generated by the magnetic poles of the magnetic pieces 1. Also, in this case, as shown in Fig. 8, the cogging torque having a period of 60° is found to be very small. Namely, the cogging torque generated by the fifth-order mode of the magnetic flux has an opposite phase to that generated by the seventh-order mode. As a result, even if a magnetized pattern or a magnet shape includes both fifth-order component and seventh-order component, the total cogging torque becomes so small when the amount (including positive and negative signs) of the former component is at the same degree as the latter component and the sign in the former is same as the latter. This phenomenon is very important. The modes such as the fifth-order one or the seventh-order one gives a large affect on the driving torque pattern. Even if a proper amount of fifth-order mode or seventh-order mode is incorporated into a magnetized pattern or a magnet shape depending on a driving form of motor, the cogging torque becomes almost zero when the absolute values of them are identical Accordingly, a driving torque pattern can be controlled at the condition of zero cogging torque.

Figs. 9(a) and 9(b) schematically show a magnetized pattern and magnet shape of the permanent magnets of the motor shown in Fig. 14(a), into which is incorporated the fifth-order mode and eleventh-order mode. Also, in this case, the cogging torque is considerably reduced, as shown in Fig. 10.

Fig. 16 shows a prior art motor, provided with four magnetic poles formed by usual permanent magnets, 15 protruding poles and distributed windings, which is suitably used for an AC servomotor. This motor generates a cogging torque containing a large number of components having period of 3°, 6°,.... . This invention can be applied to this motor as follows:

In the motor,

$m = 4$ (number of magnetic poles),

$p = 15$ (number of protruding poles),

$q = 1$ (greatest common measure of m/2 and $\underline{p}$),

$i = 15$ (p/q), and

$j = 2$ (an even number of 2 to 20, but for simplicity, $\underline{j}$ is set to 2 in this example)

Therefore, $n = (i \times j) \pm 1$

$= (15 \times 2) \pm 1 = 31$ or 29.

Using above values, the equation (1) can be rewritten as follows:

$$h(\theta) = h_o + b_{29} \sin 29\theta + b_{31} \sin 31\theta .$$

The coefficients $b_{29}$ and $b_{31}$ can be determined from a characteristic chart of the cogging torque to minimize the cogging torque.

Fig. 17 shows another type of prior art motor having protruding poles in each of which is formed an auxiliary groove. When the present invention is applied to this motor, the number of the protruding poles affecting the cogging torque is considered as six. In this case, n-th order component satisfying that $\underline{n}$ is equal to $6j\pm 1$ where $\underline{j}$ is a even number of 2 to 20 may be incorporated into the magnetized pattern or the magnet shape of the permanent magnets.

Although in the above embodiments, the adjustment of the widthwise length has been made to the permanent magnets of the motor, whose magnetization is directed along the radial direction, the present invention can be also applied to a motor having permanent magnets whose magnetization is directed along only one specified direction as shown in Fig. 15(a), for eliminating a torque ripple in the same manner as above. In this case, the distribution of the magnetic flux density on the magnetic pole surface is occupied almost by the first-order component as shown in Fig.15(b) Accordingly, the incorporation of n-th order mode into such permanent magnets by varing the magnetized pattern thereof in the widthwise direction in this case means the incorporation of higher-order mode of $\beta_n \sin n\theta \cdot |\sin\theta|$ into the magnetic flux.

Fig. 11 shows what kind of higher harmonic waves are actually added to the magnetic flux pattern when $\underline{n}$ is 5 and $\beta_5$ is 1. It is clear from Fig. 11 that the added fifth-order component is reduced to about 60% of its original value, about 20% of negative seventh-order mode is generated and a small amount of 3k (where $\underline{k}$ is an integer) components are also generated. Accordingly, when the present invention is applied to such motor, the same effects can be obtained as in the motor using the permanent magnets whose magnetization is directed along the radial direction, by controlling the added components in consideration of these matters.

Fig. 18 shows still further example of the prior art motor using C-shaped magnets whose magnetization is directed along one specified direction and whose one pole subtends an angle less than 180°. This invention can be also applied to such motor in the following manner.

Fig. 12 shows an analysis of a surface magnetic flux, generated by the C-type magnet whose subtending angle is 150°, into each-order of harmonic waves. In using the permanent magnets magnetized in one specified direction, $F_r(\theta)$ component in the equation (2) is not zero at the portion where the permanent magnet does not exists, and a small amount of higher harmonic waves are added to the fundamental wave. When the n-th-order mode is incorporated into the magnetized area of the permanent magnet by varying its magnetized pattern, the higer harmonic waves having the following $F_r(\theta)$ component is actually incorporated into the magnetic flux.

$$F_r(\theta) = \beta_n \cdot \sin\theta \cdot |\sin\theta|$$

$$(\text{where } \frac{\pi}{12} \leqq \theta \leqq \frac{11}{12}\pi, \ \frac{13}{12}\pi \leqq \theta \leqq \frac{23}{12}\pi)$$

$$F_r(\theta) = O$$

$$(\text{where } 0 \leqq \theta < \frac{\pi}{12}, \ \frac{11}{12}\pi < \theta < \frac{13}{12}\pi, \ \frac{23}{12}\pi < \theta < 2\pi)$$

Fig. 13 shows what kind of higher harmonic waves are acutually added to the magnetic flux pattern, when $\underline{n}$ is 5 and $\beta_5$ is 1. In this case, the situation is substantially the same as the prior art motor using the permanent magnets as shown in Fig. 15(a), except that 3k-th and $(3k\pm 1)$-th-order components are generated in addition to the added components. Accordingly, when the present invention is applied to such motor wherein the permanent magnets are not arranged all along the periphery, the same effects as above can be obtained by incorporating the higher-order modes into the magnetized pattern or the magnet shape of the permanent magnets. In this case, it is important to control the amounts of higher-order modes to be added newly in consideration of the ratio of the higher-order modes existing therein originally, because the magnetic flux includes a large amount of higher-order modes.

In the case of the motor wherein the field magnet system does not exist at some regions of the periphery in the motor's rotational direction, when the widthwise length of the field magnet system is expanded in a Fourier series in terms of a rotational angle, the Fourier series includes higher-order components. Therefore, the Fourier coefficients may be selected by changing the angle subtended by the field magnet system for controlling a cogging torque. However, such method controls only one specified mode of cogging torque and does not reduce the absolute value of the cogging torque. For this reason, such method is not within the range of the present invention.

Having described the present invention in connection with embodiments thereof heretofore, it is to be understood that the present invention is not limited to the above embodiments and many modifications can be made within the scope of the claims.

## Claims

1. An electric motor of the kind having a field magnetic system comprising an even number $\underline{m}$ of permanent magnetic poles (1) arranged in a circle, the or each two adjacent poles being of opposite polarity (N,S),

   an armature having a number $\underline{p}$ of poles (3) each of which has an end portion facing the field magnet system and defining therewith a magnetic gap (g) across which magnetic flux extends to generate torque in the operation of the motor,

   wherein the field magnet system has a magnetic flux generating area whose widthwise length, $h(\theta)$, perpendicular to the direction of rotation of the armature is not constant, characterised in that:

   said widthwise length $h(\theta)$ varies with a rotational angle $(\theta)$ of the armature and comprises a fundamental sinusoidal component together with a selected distribution of harmonic components in accordance with the formula

$$h(\theta) = h_0 + \sum_{n=1}^{\infty} a_n \cos(2\pi n\theta / T) + \sum_{n=1}^{\infty} b_n \sin(2\pi n\theta / T)$$

   wherein

   $\underline{n}$ is an integer of $(i \times j) \pm 1$ where $\underline{j}$ is an even number of 2 to 20,

   $a_n$ is a coefficient for cosine components,

   $b_n$ is a coefficient for sine components and is not zero for at least one value of $\underline{n}$,

   T is a period of rotation of the armature through an angle corresponding to the peripheral length of a pair of adjacent N-pole and S-pole,

   $\underline{i}$ is an integer given by p/q where $\underline{q}$ is the greatest common measure of m/2 and $\underline{p}$, and

   $h_0$ is equal to H when $0 \leq \theta < \pi$ and equal to -H when $\pi \leq \theta < 2\pi$ where H is a standard widthwise length of the field magnet system.

2. A motor as claimed in Claim 1, in which said field magnet system is shaped so that said widthwise length satisfies the formula given in claim 1.

3. A motor as claimed in Claim 1, in which the coefficient $b_n$ is determined so that the $(i \times j + 1)$th-order component coincides with the $(i \times j - 1)$th-order component of the higher-order sine wave components of the magnetic flux.

4. A method of trimming a torque characteristic of a motor comprising a field magnet system with a constant widthwise length (h) comprising plural permanent magnetic poles (1) arranged in circle such that the or each adjacent two permanent magnetic poles have opposite polarity (N,S) to each other, and an armature with plural poles (3), the end surface of each of the poles facing the magnetic poles of the field magnet system, said method comprising the steps of:

   measuring the distribution of the magnetic flux generated by the field magnet system relative to the rotational angle of the armature;

   evaluating the harmonic wave components of the magnetic flux generated by the field magnet system by expanding in a series a function expressing the distribution curve of the magnetic flux;

   measuring the cogging torque generated by the field magnet system relative to the rotational angle of the armature;

   examining the relationship between the harmonic wave components of the magnetic flux and the cogging torque; and

   adjusting the widthwise length $(h(\theta))$ of the magnetic flux generating area of the field magnet system by incorporating into the widthwise length the variation corresponding to the selected harmonic wave components which cause the cogging torque to be eliminated.

## Patentansprüche

1. Elektromotor des Typs mit Feldmagnetsystem, welcher eine gerade Anzahl m von Permanentmagnetpolen (1) aufweist, die in einem Kreis angeordnet sind, wobei die beiden oder jeweils zwei benachbarte Pole entgegengesetzte Polarität (N, S) besitzen,

mit einem Anker, der eine Anzahl von p Polen (3) aufweist, die jeweils mit einem Endabschnitt dem Feldmagnetsystem zugewandt sind und mit diesem einen Magnetluftspalt (g) bilden, über den sich magnetischer Fluß erstreckt, um beim Motorbetrieb Drehmoment zu erzeugen,

wobei das Feldmagnetsystem eine Induktionsfluß-Erzeugungsfläche aufweist, deren Breitenabmessung $h(\theta)$ senkrecht zur Drehrichtung des Ankers nicht konstant ist, dadurch gekennzeichnet, daß sich die Breitenabmessung $h(\theta)$ mit einem Drehwinkel $(\theta)$ des Ankers ändert und eine sinusförmige Grundkomponente zusammen mit einer ausgewählten Verteilung von Oberwellenkomponenten entsprechend folgender Formel aufweist:

$$h(\theta) = h_0 + \sum_{n=1}^{\infty} a_n \cos(2\pi n\theta / T) + \sum_{n=1}^{\infty} b_n \sin(2\pi n\theta / T)$$

wobei

$n$ eine natürliche Zahl $(i \times j) \pm 1$ mit $j$ als gerade Zahl von 2 bis 20 ist,

$a_n$ ein Koeffizient für Cosinuskomponenten ist,

$b_n$ ein Koeffizient für Sinuskomponenten und zumindest für einen Wert von $n$ nicht null ist,

$T$ eine Drehzeitspanne des Ankers über einen Winkel ist, welcher der Umfangslänge eines Paares benachbarter N- und S-Pole entspricht,

$i$ eine natürliche Zahl ist, gegeben durch $p/q$ mit $q$ als größtes gemeinsames Maß von $m/2$ und $p$, und

$h_0$ gleich H ist, wenn $0 \leqq \theta < \pi$, und gleich -H ist, wenn $\pi \leqq \theta < 2\pi$, wenn H eine Standardbreitenabmessung des Feldmagnetsystems ist.

2.	Motor nach Anspruch 1, bei dem das Feldmagnetsystem derart geformt ist, daß die Breitenabmessung die in Anspruch 1 angegebene Formel erfüllt.

3.	Motor nach Anspruch 1, bei dem der Koeffizient $b_n$ derart bestimmt ist, daß die Komponente $(i \times j + 1)$-ter Ordnung übereinstimmt mit der Komponente $(i \times j - 1)$-ter Ordnung der Sinus- Oberwellenkomponenten des magnetischen Flusses.

4.	Verfahren zum Trimmen eines Drehmomentverlaufs eines Motors mit einem Feldmagnetsystem mit einer konstanten Breitenabmessung (H), das mehrere Permanentmagnetpole (1) aufweist, die in einem Kreis angeordnet sind, so daß die oder jeweils zwei benachbarte Permanentmagnetpole entgegengesetzte Polarität (N, S) aufweisen, sowie einem Anker mit mehreren Polen (3), deren jeweilige Stirnfläche den Magnetpolen des Feldmagnetsystems gegenüberliegt, gekennzeichnet durch die Schritte:

Messen der Verteilung des von dem Feldmagnetsystem erzeugten magnetischen Flusses relativ zu dem Drehwinkel des Ankers;

Ermitteln der Oberwellenkomponenten des von dem Feldmagnetsystem erzeugten magnetischen Flusses durch Reihenentwicklung einer Funktion, welche die Verteilungskurve des magnetischen Flusses ausdrückt;

Messen des von dem Feldmagnetsystem relativ zu dem Drehwinkel des Ankers erzeugten Verzahnungs-Drehmoments;

Untersuchung der Beziehung zwischen den Oberwellenkomponenten des magnetischen Flusses und dem Verzahnungsdrehmoment; und

Einstellen der Breitenabmessung $(h(\theta))$ der Induktionsfluß-Erzeugungsfläche des Feldmagnetsystems durch in Breitenabmessung erfolgendes Einbauen der Änderung, welche den ausgewählten Oberwellenkomponenten entspricht, die das zu beseitigende Verzahnungsdrehmoment verursachen.

## Revendications

1.	Moteur électrique du type qui comporte un système magnétique inducteur comprenant un nombre pair m de pôles magnétiques permanents (1) disposés en cercle, les pôles de chaque paire de pôles adjacents ayant des polarités opposées (N, S),

une armature ayant un nombre p de pôles (3) ayant chacun une partie d'extrémité tournée vers le système d'aimant inducteur et délimitant avec lui un entrefer (g) dans lequel est disposé un flux magnétique pour la création d'un couple lors du fonctionnement du moteur,

dans lequel le système à aimant inducteur a une région génératrice d'un flux magnétique dont la longueur mesurée suivant la largeur h(θ), perpendiculairement à la direction de rotation de l'armature, n'est pas constante, caractérisé en ce que :

la longueur dans la direction de la largeur h(θ) varie avec un angle de rotation (θ) de l'armature et comprend une composante fondamentale sinusoïdale avec une distribution choisie de composantes harmoniques suivant la relation :

$$h(\theta) = h_o + \sum\nolimits_{n=1}^{\infty} a_n \cos(2\pi n\theta/T) + \sum\nolimits_{n=1}^{\infty} b_n \sin(2\pi n\theta/T)$$

n étant un nombre entier tel que (i.j)+1, j étant un nombre pair compris entre 2 et 20,

$a_n$ étant un coefficient des composantes cosinusoïdales,

$b_n$ étant un coefficient des composantes sinusoïdales, et

n'étant pas nul pour une valeur au moins de n,

T étant une période de rotation de l'armature d'un angle correspondant à la longueur périphérique d'une paire de pôles N et S adjacents,

i étant un nombre entier donné par p/q, q étant le plus grand commun diviseur de m/2 et p, et

$h_0$ étant égal à H lorsque $0 \leq \theta < \pi$ et à -H lorsque $\pi \leq \theta < 2\pi$, H étant la longueur normale dans la direction de la largeur du système à aimant inducteur.

2. Rotor selon la revendication 1, dans lequel le système à aimant inducteur a une configuration telle que la longueur dans la direction de la largeur correspond à la formule donnée dans la revendication 1.

3. Moteur selon la revendication 1, dans lequel le coefficient $b_n$ est déterminé de manière que la composante du (i.j+1)e ordre coïncide avec la composante du (i.j-1)e ordre des composantes sinusoïdales d'ordre supérieur du flux magnétique.

4. Procédé de réglage d'une caractéristique de couple d'un moteur qui comprend un système à aimant inducteur ayant une longueur suivant la largeur (h) comprenant plusieurs pôles magnétiques permanents (1) disposés en cercle de manière que tous les pôles magnétiques permanents adjacents aient des polarités opposées (N, S), et une armature ayant plusieurs pôles (3), la surface d'extrémité de chacun des pôles étant tournée vers les pôles magnétiques du système à aimant inducteur, le procédé comprenant les étapes suivantes :

la mesure de la distribution du flux magnétique créé par le système à aimant inducteur par rapport à l'angle de rotation de l'armature,

l'évaluation des composantes harmoniques du flux magnétique créé par la système à aimant inducteur par développement en série d'une fonction exprimant la courbe de distribution du flux magnétique,

la mesure du couple de denture créé par le système à aimant inducteur par rapport à l'angle de rotation de l'armature,

l'examen de la relation entre les composantes harmoniques du flux magnétique et le couple de denture, et

l'ajustement de la longueur suivant la largeur (h(θ)) de la région génératrice du flux magnétique du système à aimant inducteur par incorporation, à la longueur suivant la largeur, de la variation correspondant aux composantes harmoniques choisies qui provoquent l'élimination du couple de denture.

# F I G . I (a)

# F I G . I (b)

# F I G. I (c)

h

N

I

# F I G. I (d)

h

I

# F I G. 2(a)

FIFTH-ORDER MODE

# F I G. 2(b)

FUNDAMENTAL MODE

# F I G. 2(c)

# F I G. 2(d)

# FIG. 3

# FIG. 4

# FIG. 5(a)

n = 7
n = 5
N
S
ROTATIONAL ANGLE (θ)

# FIG. 5(b)

n = 7
n = 5
N
S
ROTATIONAL ANGLE (θ)

# F I G. 6

COGGING TORQUE (RELATIVE AMOUNT)

⟶ ROTATIONAL ANGLE (θ)

# F I G. 7(a)

N     S

⟶ ROTATIONAL ANGLE (θ)

16

# FIG. 7(b)

⟶ ROTATIONAL ANGLE (θ)

# FIG. 8

⟶ ROTATIONAL ANGLE (θ)

# F I G. 9(a)

←———— ROTATIONAL ANGLE (θ)

# F I G. 9(b)

←———— ROTATIONAL ANGLE (θ)

# F I G. 10

COGGING TORQUE (RELATIVE AMOUNT)

0 — ROTATIONAL ANGLE (θ) — 60°

# F I G. 11

$\sin 5\theta \cdot |\sin\theta|$

n = 5

n = 7

n = 3

0 — π — 2π

19

# FIG. 12

SURFACE MAGNETIC FLUX DENSITY

n=1

n=3

n=7

n=5

O

π

2π

# FIG. 13

n=5

n=7

n=3

O

2π

20

# FIG. 14(a)

# FIG. 14(b)

MAGNETIC FLUX DENSITY ON MAGNETIC POLE SURFACE

0    π    2π

# F I G . 15(a)

# F I G . 15(b)

FIG. 16

FIG. 17

FIG. 18